# FASCICULE DE BREVET EUROPEEN

(11) **EP 3 752 412 B1**
(45) Date de publication et mention de la délivrance du brevet: **21.12.2022**
(21) Numéro de dépôt: 19703725.2
(22) Date de dépôt: 08.02.2019
(51) Int. Cl.: B62D 35/00

(54) **VÉHICULE AUTOMOBILE COMPRENANT UN DISPOSITIF AÉRODYNAMIQUE LATÉRAL**
KRAFTFAHRZEUG MIT EINER SEITLICHEN AERODYNAMISCHEN VORRICHTUNG
MOTOR VEHICLE COMPRISING A LATERAL AERODYNAMIC DEVICE

(30) Priorité: 13.02.2018 FR 1851184
(43) Date de publication de la demande: 23.12.2020
(73) Titulaire: Renault s.a.s, 92100 Boulogne Billancourt (FR)
(72) Inventeur: CHAPRON, Thibault, 78210 SAINT CYR L'ECOLE (FR)
(74) Mandataire: Renault Group
(86) Numéro de dépôt international: PCT/EP2019/053167
(87) Numéro de publication internationale: WO 2019/158445

(56) Documents cités:
- EP-A1- 2 581 269
- WO-A1-2014/191371
- FR-A1- 2 885 343
- FR-A1- 3 062 368
- GB-A- 2 531 290

## Description

### Domaine de l'invention :

La présente invention concerne un véhicule automobile comprenant une structure et au moins un ouvrant mobile par rapport à la structure entre une position fermée et une position ouverte, le véhicule comprenant un dispositif aérodynamique.

### Etat de la technique :

Certains véhicules automobiles comportent une sortie d'air latérale afin d'évacuer l'air s'engouffrant dans le passage de roue ou le compartiment moteur. On parle de « débourrage ». Sur les véhicules connus, cette sortie d'air latérale est située sur l'aile avant. Ces véhicules connus sont typiquement des véhicules de type propulsion. Or les véhicules de type traction ont pour caractéristique d'avoir une partie d'aile étroite entre la porte avant et le passage de roue, à l'inverse des véhicules de type propulsion. Ce manque d'espace dans la partie d'aile arrière, entre le passage de roue et la porte avant ne permet pas d'y intégrer une sortie d'air adéquate avec un traitement design / style adapté.

Le GB 2 531 290 A et le FR 2 885 343 A1 divulguent tous deux des véhicules comprenant des dispositifs aérodynamiques selon le préambule de la revendication

### But de l'invention :

L'invention a pour but de pallier tout ou partie des inconvénients précédents en proposant un véhicule automobile ayant une sortie d'air latérale adaptée aux véhicules de type traction, ayant peu d'espace sur la partie arrière de l'aile et compatible avec une production en grande série pour être appliqué de manière réaliste à un véhicule conventionnel.

### Objet de l'invention :

A cet effet, l'invention a pour objet un véhicule automobile comprenant une structure et au moins un ouvrant mobile par rapport à la structure entre une position fermée et une position ouverte, le véhicule comprenant un dispositif aérodynamique comportant au moins un conduit canalisant un écoulement d'air entre une entrée d'air solidaire de la structure et une sortie d'air solidaire de l'ouvrant en passant par une zone de jonction située à une interface entre la structure et l'ouvrant. La sortie d'air est par exemple constituée par une pièce rapportée sur l'ouvrant. Selon l'invention, la structure comprend un pied avant sur lequel l'ouvrant est articulé, l'ouvrant comportant un caisson inférieur, le caisson étant au moins en partie recouvert d'un déflecteur aérodynamique rapporté comportant un conduit de passage d'air débouchant par la sortie d'air, cette dernière étant située dans une région centrale du caisson, sensiblement à mi-hauteur considérée suivant ladirection verticale.

Le dispositif assure une première fonction aérodynamique permettant d'évacuer latéralement de l'air sur des véhicules ayant un espace réduit entre le passage de roue et la porte avant du véhicule, mais également une fonction esthétique contribuant à renforcer le style du véhicule et lui donner un caractère plus dynamique.

Selon d'autres caractéristiques avantageuses de l'invention :
- le déflecteur aérodynamique comprend des parties haute et basse s'étendant respectivement au-dessus et en dessous de la sortie d'air sur une zone représentant au moins 50% de la hauteur du caisson ;
- le déflecteur aérodynamique comporte une arête de fuite délimitant latéralement la sortie d'air, cette arête de fuite s'étendant au-dessus et en dessous de la sortie d'air en recouvrant au moins en partie les parties haute et basse du déflecteur ;
- le déflecteur comporte d'une part une zone arrière ayant la forme d'un U couché présentant des branches latérales s'étendant vers l'avant du véhicule, cette zone arrière étant plaquée et fixée à une peau extérieure du caisson, et d'autre part une zone avant intégrant la sortie d'air et l'arête de fuite, cette dernière étant jointive avec chaque branche adjacente du U ;
- le dispositif aérodynamique comporte d'une part un conduit avant solidaire de la structure et relié à l'entrée d'air, le conduit avant étant juxtaposé au pied avant du véhicule, et d'autre part un conduit arrière intégré au déflecteur aérodynamique monté sur l'ouvrant, le dispositif comprenant en outre des moyens d'étanchéité interposés entre le conduit avant et le conduit arrière et/ou entre l'un au moins des conduits avant et arrière et la structure du véhicule, notamment un élément de carrosserie ;
- le déflecteur aérodynamique comporte un bord avant chaussé sur un bord de feuillure avant de l'ouvrant ;
- le déflecteur aérodynamique est fixé à l'ouvrant par des ergots ou clips engagés par contrainte dans des orifices de fixation correspondants ménagés dans l'ouvrant ;
- le déflecteur aérodynamique comprend au moins un conduit d'air à section transversale ovale, et de préférence deux conduits d'air à section transversale ovale ;
- le déflecteur aérodynamique a une dimension longitudinale mesurée suivant la direction longitudinale du véhicule qui est comprise entre le quart et la moitié de la longueur de l'ouvrant, mesurée suivant cette même direction.

### Exposé de l'invention :

L'invention sera mieux comprise à la lecture de la description suivante d'un exemple non limitatif de l'invention, et à la lumière des dessins annexés sur lesquels :
- la figure 1 représente une vue de côté d'un véhicule automobile comprenant un dispositif aérodynamique selon l'invention,
- la figure 2 représente une vue de détail du véhicule de la figure 1, localisée à la partie avant de l'ouvrant du véhicule, cette vue illustrant des plans de coupe horizontaux de l'ouvrant.
- les figures 3 et 4 sont des vues de dessous respectivement suivant les plans de coupe 1 et 2 du détail de la figure 2, lorsque l'ouvrant est fermé,
- la figure 5 est une vue identique à la figure 2,
- les figures 6 et 7 sont des vues de dessous respectivement suivant les plans de coupe 1 et 2 du détail de la figure 5, lorsque l'ouvrant est ouvert,
- la figure 8 est une vue identique à la figure 2, illustrant des plans de coupe verticaux de l'ouvrant,
- les figures 9 et 10 sont des vues vers l'arrière respectivement suivant les plans de coupe 3 et 4 du détail de la figure 8.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Les notions avant-arrière s'entendent par rapport au sens de marche normal du véhicule qui est dirigé vers l'avant.

Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement ve rticale est admis dans le cadre de l'invention.

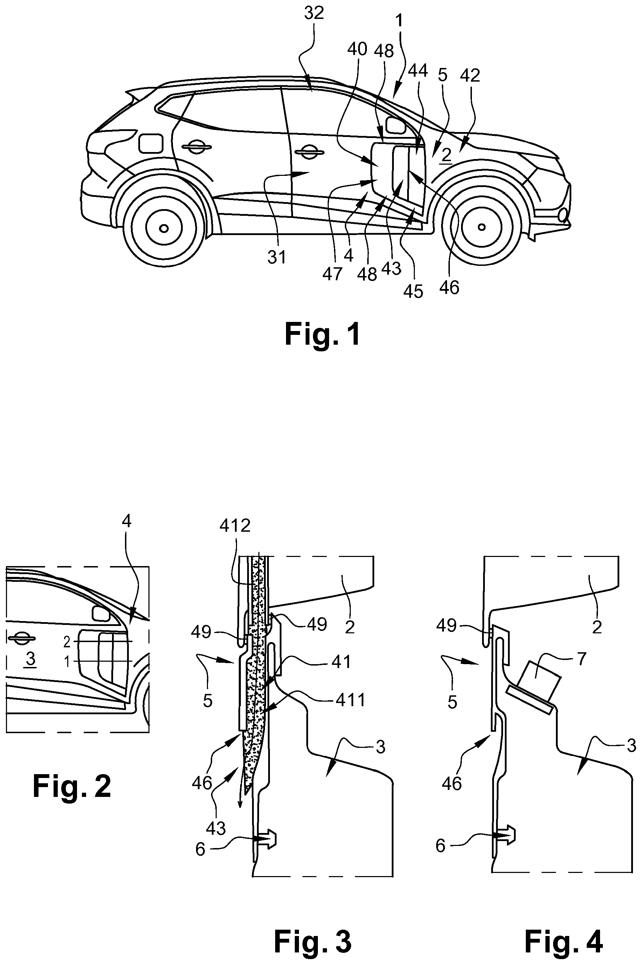

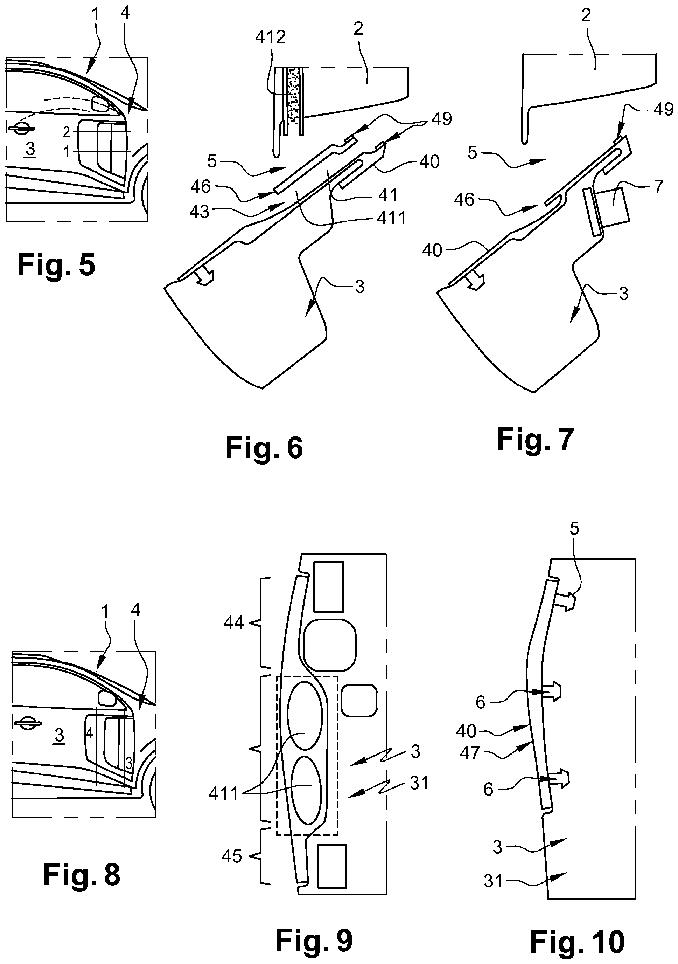

On a représenté à la figure 1 un véhicule automobile 1 comprenant une structure 2 et au moins un ouvrant 3 mobile par rapport à la structure 2 entre une position fermée et une position ouverte. L'ouvrant 3 est typiquement articulé sur la structure par l'intermédiaire de charnières 7 (figures 4 et 7) superposées et à distance l'une de l'autre verticalement. Le véhicule comprend un dispositif aérodynamique 4 comportant au moins un conduit 41 canalisant un écoulement d'air entre une entrée d'air 42 solidaire de la structure 2 et une sortie d'air 43 solidaire de l'ouvrant 3 en passant par une zone de jonction 5 située à une interface entre la structure 2 et l'ouvrant 3.

La structure 2 comprend un pied avant constituant un élément fixe sur lequel l'ouvrant 3 est articulé. L'ouvrant 3 comporte classiquement un caisson inférieur 31, surmonté par exemple d'un encadrement 32, cet encadrement accueillant une vitre du véhicule. Le caisson 31 est au moins en partie recouvert d'un déflecteur aérodynamique 40 comportant un conduit 411 de passage d'air débouchant par la sortie d'air 43 située dans une région centrale du caisson 31, sensiblement à mi-hauteur considérée suivant la direction verticale Z. Le conduit 411 constitue la partie arrière du conduit 41, située dans les limites de l'ouvrant 3.

Dans un autre mode de réalisation non représenté de l'invention, par exemple dans le cas d'une implantation atypique resserrée haute ou basse du couple de charnières, la sortie d'air peut être implantée respectivement en bas ou en haut du caisson 31.

Le déflecteur aérodynamique 40 comprend des parties haute 44 et basse 45 s'étendant respectivement au-dessus et en dessous de la sortie d'air 43 sur une zone ou une étendue représentant globalement au moins 50% de la hauteur du caisson 31.

Comme illustré aux figures 1, 3, 4, 6 et 7, le déflecteur aérodynamique 40 comporte une arête de fuite 46 délimitant latéralement la sortie d'air 43, cette arête de fuite 46 s'étendant au-dessus et en dessous de la sortie d'air 43 en recouvrant au moins en partie les parties haute 44 et basse 45 du déflecteur 40.

Les parties au-dessus et en dessous de la sortie d'air 43 sont à une hauteur qui ne correspond pas celle du conduit d'air 41, en raison des contraintes d'architecture du véhicule. En effet la figure 3, correspondant au plan de coupe 1 de la figure 2, illustre la position du conduit d'air 41 dans une zone centrale du caisson, sensiblement à mi-hauteur de celui-ci suivant la direction verticale Z. En revanche la figure 4, correspondant au plan de coupe 2 de la figure 2, illustre qu'il n'y a pas de conduit d'air à ce niveau en raison ici de la présence d'une charnière 7 de l'ouvrant 3, assurant l'articulation de l'ouvrant 3 par rapport à la structure 2 du véhicule. Il n'y a donc pas d'écoulement d'air sortant du conduit 41 au niveau des parties haute 44 et basse 45 du déflecteur 40

Le fait que la ligne de fuite 46 empiète sur ces parties haute 44 et basse 45 intègre parfaitement le déflecteur 40 à l'ouvrant 3 en formant une sorte d'ouïe latérale sur l'ouvrant 3, ce déflecteur ayant de ce fait des dimensions et un style adapté au véhicule. Le déflecteur assure ainsi une première fonction qui contribue au débourrage aérodynamique en évacuant l'air engouffré dans le passage de roue ou dans le compartiment moteur du véhicule. Le déflecteur assure une autre fonction comme élément de style ou enjoliveur rapporté sur une partie avant de l'ouvrant 3 du véhicule.

Le déflecteur 40 comporte également une zone arrière 47 ayant la forme d'un U couché présentant une branche centrale et des branches latérales 48 s'étendant vers l'avant du véhicule (figure 1). Cette zone arrière 47 est plaquée et fixée à une peau extérieure du caisson 31. Le déflecteur 40 comporte également une zone avant intégrant la sortie d'air 43 et l'arête de fuite 46. L'arête de fuite 46 est jointive avec chaque branche 48 adjacente du U.

Le dispositif aérodynamique 4 comporte un conduit avant 412 solidaire de la structure et relié à l'entrée d'air 42. Celui-ci est juxtaposé au pied avant du véhicule. Le dispositif aérodynamique 4 comporte également le conduit arrière 411, déjà évoqué ci-dessus. Ce conduit arrière 411 est intégré au déflecteur aérodynamique 40 monté sur l'ouvrant 3 et est disposé dans le prolongement du conduit avant 412.

Le déflecteur aérodynamique 40 comprend au moins un conduit d'air 411 à section ovale, et de préférence deux conduits d'air à section ovale. La forme ovale est orientée de préférence verticalement de façon que sa plus grande dimension soit dirigée sensiblement suivant la direction verticale Z.

Le dispositif comprend en outre des moyens d'étanchéité 49 interposés entre le conduit avant 412 et le conduit arrière 411 et/ou entre d'une part l'un au moins des conduits avant 412 et arrière 411 et d'autre part la structure 2 du véhicule, notamment un élément de carrosserie. Ces moyens d'étanchéité 49 sont typiquement des joints en matériaux élastomères ou en mousse conformés pour canaliser l'écoulement d'air et limiter les fuites dans la zone de jonction 5.

En référence aux figures 3, 4, 6 et 7, le déflecteur aérodynamique 40 comporte un bord avant chaussé sur un bord de feuillure avant de l'ouvrant 3, de façon à recouvrir ce bord à l'avant de l'ouvrant 3.

Comme on le voit aux figures 4 et 10, le déflecteur aérodynamique 40 est fixé à l'ouvrant 3 par des ergots ou clips 6 engagés par contrainte dans des orifices de fixation correspondants ménagés dans l'ouvrant 3.

Le déflecteur aérodynamique 40 a une dimension longitudinale mesurée suivant la direction longitudinale X du véhicule qui est comprise entre le quart et la moitié de la longueur de l'ouvrant 3, mesurée suivant cette même direction X.

Bien entendu, on a décrit le dispositif aérodynamique pour un côté du véhicule mais il est clair que ce dispositif est prévu symétriquement de chaque côté du véhicule.

Bien entendu, l'invention n'est pas limitée aux modes ou variantes de réalisation décrits précédemment et comprends tous les équivalents techniques de ces moyens.

## Revendications

1. Véhicule automobile (1) comprenant une structure (2) et au moins un ouvrant (3) mobile par rapport à la structure (2) entre une position fermée et une position ouverte, le véhicule (1) comprenant un dispositif aérodynamique comportant au moins un conduit (41) canalisant un écoulement d'air entre une entrée d'air (42) solidaire de la structure (2) et une sortie d'air (43) solidaire de l'ouvrant (3) en passant par une zone de jonction (5) située à une interface entre la structure (2) et l'ouvrant (3), **caractérisé en ce que** la structure (2) comprend un pied avant sur lequel l'ouvrant (3) est articulé, l'ouvrant (3) comportant un caisson inférieur (31), le caisson (31) étant au moins en partie recouvert d'un déflecteur aérodynamique (40) rapporté comportant un conduit (411) de passage d'air débouchant par la sortie d'air (43), cette sortie située dans une région centrale du caisson (31), sensiblement à mi-hauteur considérée suivant la direction verticale (Z).

2. Véhicule selon la revendication 1, **caractérisé en ce que** le déflecteur aérodynamique (40) comprend des parties haute (44) et basse (45) s'étendant respectivement au-dessus et en dessous de la sortie d'air (43) sur une zone représentant au moins 50% de la hauteur du caisson (31).

3. Véhicule selon la revendication 2, **caractérisé en ce que** le déflecteur aérodynamique (40) comporte une arête de fuite (46) délimitant latéralement la sortie d'air (43), cette arête de fuite (46) s'étendant au-dessus et en dessous de la sortie d'air (43) en recouvrant au moins en partie les parties haute (44) et basse (45) du déflecteur (40).

4. Véhicule selon la revendication 3, **caractérisé en ce que** le déflecteur (40) comporte d'une part une zone arrière (47) ayant la forme d'un U couché présentant des branches latérales (48) s'étendant vers l'avant du véhicule (1), cette zone arrière (47) étant plaquée et fixée à une peau extérieure du caisson (31), et d'autre part une zone avant intégrant la sortie d'air (43) et l'arête de fuite (46), cette dernière étant jointive avec chaque branche (48) adjacente du U.

5. Véhicule selon l'une quelconque des revendications 1 à 4, **caractérisé en ce que** le dispositif aérodynamique (40) comporte d'une part un conduit avant (412) solidaire de la structure (2) et relié à l'entrée d'air (42), le conduit avant (412) étant juxtaposé au pied avant du véhicule, et d'autre part un conduit arrière (411) intégré au déflecteur aérodynamique (40) monté sur l'ouvrant (3), le dispositif comprenant en outre des moyens d'étanchéité (49) interposés entre le conduit avant (412) et le conduit arrière (411) et/ou entre l'un au moins des conduits avant (412) et arrière (411) et la structure (2) du véhicule, notamment un élément de carrosserie.

6. Véhicule selon l'une quelconque des revendications 1 à 5, **caractérisé en ce que** le déflecteur aérodynamique (40) comporte un bord avant chaussé sur un bord de feuillure avant de l'ouvrant (3).

7. Véhicule selon l'une quelconque des revendications 1 à 6, **caractérisé en ce que** le déflecteur aérodynamique (40) est fixé à l'ouvrant (3) par des ergots ou clips (6) engagés par contrainte dans des orifices de fixation correspondants ménagés dans l'ouvrant (3).

8. Véhicule selon l'une quelconque des revendications 1 à 7, **caractérisé en ce que** le déflecteur aérodynamique (40) comprend au moins un conduit d'air (411) à section ovale, et de préférence deux conduits d'air (411) à section ovale.

9. Véhicule selon l'une quelconque des revendications 1 à 8, **caractérisé en ce que** le déflecteur aérodynamique (40) a une dimension longitudinale mesurée suivant la direction longitudinale (X) du véhicule qui est comprise entre le quart et la moitié de la longueur de l'ouvrant (3), mesurée suivant cette même direction (X).

## Patentansprüche

1. Kraftfahrzeug (1), umfassend einen Aufbau (2) und mindestens ein Öffnungsteil (3), das bezüglich des Aufbaus (2) zwischen einer geschlossenen Position und einer offenen Position beweglich ist, wobei das Fahrzeug (1) eine aerodynamische Vorrichtung umfasst, die mindestens einen Kanal (41) aufweist, der eine Luftströmung zwischen einem fest mit dem Aufbau (2) verbundenen Lufteingang (42) und einen fest mit dem Öffnungsteil (3) verbundenen Luftausgang (43) lenkt, indem diese durch einen an einer Schnittstelle zwischen dem Aufbau (2) und dem Öffnungsteil (3) angeordneten Verbindungsbereich (5) geht, **dadurch gekennzeichnet, dass** der Aufbau (2) ein vorderes Fußende umfasst, an dem das Öffnungsteil (3) angelenkt ist, wobei das Öffnungsteil (3) ein unteres Gehäuse (31) aufweist, wobei das Gehäuse (31) mindestens teilweise von einer angebrachten aerodynamischen Ablenkvorrichtung (40) abgedeckt ist, die einen Kanal (411) zum Durchgang von Luft aufweist, der in dem Luftausgang (43) mündet, wobei dieser Ausgang in einem mittleren Bereich des Gehäuses (31), in der vertikalen Richtung (Z) betrachtet im Wesentlichen auf mittlerer Höhe, angeordnet ist.

2. Fahrzeug nach Anspruch 1, **dadurch gekennzeichnet, dass** die aerodynamische Ablenkvorrichtung (40) obere Teile (44) und untere Teile (45) umfasst, die sich oberhalb bzw. unterhalb des Luftausgangs (43) über eine Zone erstrecken, die mindestens 50% der Höhe des Gehäuses (31) ausmacht.

3. Fahrzeug nach Anspruch 2, **dadurch gekennzeichnet, dass** die aerodynamische Ablenkvorrichtung (40) eine Abströmkante (46) aufweist, die den Luftausgang (43) seitlich begrenzt, wobei sich diese Abströmkante (46) oberhalb und unterhalb des Luftausgangs (43) erstreckt, indem sie den oberen (44) und den unteren (45) Teil der Ablenkvorrichtung (40) mindestens teilweise abdeckt.

4. Fahrzeug nach Anspruch 3, **dadurch gekennzeichnet, dass** die Ablenkvorrichtung (40) einerseits eine hintere Zone (47) aufweist, die die Form eines liegenden U mit seitlichen Ästen (48) hat, die sich zu der Vorderseite des Fahrzeugs (1) erstrecken, wobei diese hintere Zone (47) an eine Außenhaut des Gehäuses (31) angepasst und befestigt ist, und andererseits eine vordere Zone, in die der Luftausgang (43) und die Abströmkante (46) eingegliedert sind, wobei Letztere mit jedem benachbarten Ast (48) des U abschließt.

5. Fahrzeug nach einem der Ansprüche 1 bis 4, **dadurch gekennzeichnet, dass** die aerodynamische Ablenkvorrichtung (40) einerseits einen vorderen Kanal (412) aufweist, der fest mit dem Aufbau (2) verbunden und mit dem Lufteingang (42) verbunden ist, wobei der vordere Kanal (412) neben dem vorderen Fußende des Fahrzeugs angeordnet ist, und andererseits einen hinteren Kanal (411), der in die aerodynamische Ablenkvorrichtung (40) eingegliedert ist, die an dem Öffnungsteil (3) montiert ist, wobei die Vorrichtung ferner Dichtungsmittel (49) zwischen dem vorderen Kanal (412) und dem hinteren Kanal (411) und/oder zwischen entweder dem vorderen (412) oder dem hinteren Kanal (411) und dem Aufbau (2) des Fahrzeugs, insbesondere einem Karosserieelement, umfasst.

6. Fahrzeug nach einem der Ansprüche 1 bis 5, **dadurch gekennzeichnet, dass** die aerodynamische Ablenkvorrichtung (40) einen auf einen vorderen Falzungsrand des Öffnungsteils (3) aufgesteckten Vorderrand aufweist.

7. Fahrzeug nach einem der Ansprüche 1 bis 6, **dadurch gekennzeichnet, dass** die aerodynamische Ablenkvorrichtung (40) mittels Bolzen oder Klammern (6), die unter Belastung in entsprechenden Befestigungsöffnungen in dem Öffnungsteil (3) Eingriff stehen, an dem Öffnungsteil (3) befestigt ist.

8. Fahrzeug nach einem der Ansprüche 1 bis 7, **dadurch gekennzeichnet, dass** die aerodynamische Ablenkvorrichtung (40) mindestens einen Luftkanal (411) mit ovalem Querschnitt und vorzugsweise zwei Luftkanäle (411) mit ovalem Querschnitt umfasst.

9. Fahrzeug nach einem der Ansprüche 1 bis 8, **dadurch gekennzeichnet, dass** die aerodynamische Ablenkvorrichtung (40) eine in der Längsrichtung (X) des Fahrzeugs gemessene Längsabmessung hat, die zwischen einem Viertel und einer Hälfte der Länge des Öffnungsteils (3), gemessen in derselben Richtung (X), liegt.

## Claims

1. Motor vehicle (1) comprising a structure (2) and at least one opening leaf (3) which can move with respect to the structure (2) between a closed position and an open position, the vehicle (1) comprising an aerodynamic device comprising at least one duct (41) that channels a flow of air between an air inlet (42) secured to the structure (2) and an air outlet (43) secured to the opening leaf (3), passing through a junction region (5) situated at an interface between the structure (2) and the opening leaf (3), **characterized in that** the structure (2) comprises a front pillar on which the opening leaf (3) is articulated, the opening leaf (3) comprising a lower box (31), the box (31) being at least in part covered by an attached aerodynamic deflector (40) comprising an air-passage duct (411) opening via the air outlet (43), this outlet being situated in a central region of the box (31), substantially at mid-height as considered in the vertical direction (Z).

2. Vehicle according to Claim 1, **characterized in that** the aerodynamic deflector (40) comprises upper (44) and lower (45) parts respectively extending above and below the air outlet (43) over a region representing at least 50% of the height of the box (31) .

3. Vehicle according to Claim 2, **characterized in that** the aerodynamic deflector (40) comprises a trailing edge (46) laterally delimiting the air outlet (43), this trailing edge (46) extending above and below the air outlet (43) so as to at least in part cover the upper (44) and lower (45) parts of the deflector (40) .

4. Vehicle according to Claim 3, **characterized in that** the deflector (40) comprises, on the one hand, a rear region (47) having the shape of a recumbent U having lateral branches (48) extending towards the front of the vehicle (1), this rear region (47) being pressed and fixed against an outer skin of the box (31), and, on the other hand, a front region incorporating the air outlet (43) and the trailing edge (46), the latter being contiguous with each adjacent branch (48) of the U.

5. Vehicle according to any one of Claims 1 to 4, **characterized in that** the aerodynamic device (40) comprises, on the one hand, a front duct (412) secured to the structure (2) and connected to the air inlet (42), the front duct (412) being juxtaposed with the front pillar of the vehicle, and, on the other hand, a rear duct (411) integrated with the aerodynamic deflector (40) mounted on the opening leaf (3), the device further comprising sealing means (49) interposed between the front duct (412) and the rear duct (411) and/or between at least one of the front (412) and rear (411) ducts and the structure (2) of the vehicle, in particular a body element.

6. Vehicle according to any one of Claims 1 to 5, **characterized in that** the aerodynamic deflector (40) comprises a front edge fitted over a front rebate edge of the opening leaf (3).

7. Vehicle according to any one of Claims 1 to 6, **characterized in that** the aerodynamic deflector (40) is fastened to the opening leaf (3) by lugs or clips (6) engaged with force into corresponding fastening orifices formed in the opening leaf (3).

8. Vehicle according to any one of Claims 1 to 7, **characterized in that** the aerodynamic deflector (40) comprises at least one air duct (411) of oval cross section, and preferably two air ducts (411) of oval cross section.

9. Vehicle according to any one of Claims 1 to 8, **characterized in that** the aerodynamic deflector (40) has a longitudinal dimension measured in the longitudinal direction (X) of the vehicle that is between a quarter and a half of the length of the opening leaf (3), measured in this same direction (X) .
